# EUROPEAN PATENT SPECIFICATION

(11) **EP 1 029 376 B1**
(45) Date of publication and mention of the grant of the patent: **10.10.2001**
(21) Application number: 98957851.3
(22) Date of filing: 12.11.1998
(51) Int. Cl.: H01M 2/02, H01M 2/08, H01M 2/26, H01M 12/06

(54) **MINIATURE GALVANIC CELL HAVING OPTIMUM LOW SURFACE AREA CONDUCTIVE COLLECTOR**
GALVANISCHE MINIATURZELLE AUSGESTATTET MIT EINEM STROMKOLLEKTOR MIT OPTIMAL KLEINER OBERFLÄCHE
PILE GALVANIQUE MINIATURE COMPORTANT UN COLLECTEUR DE COURANT A PETITE SURFACE ACTIVE OPTIMALE

(30) Priority: 14.11.1997 US 970683
(43) Date of publication of application: 23.08.2000
(73) Proprietor: Eveready Battery Company, Inc., Westlake, Ohio 44145-0616 (US)
(72) Inventor: HEINZ, Henry, Jr., Sheffield Lake, OH 44054 (US)
(74) Representative: Lord, Hilton David
(86) International application number: PCT/US98/24115
(87) International publication number: WO 99/26302

(56) References cited:
- EP-A- 0 298 690
- FR-A- 2 304 182
- US-A- 4 041 211
- US-A- 5 662 717

## Description

This invention relates to miniature-type galvanic cells employing a two-part housing and a sealing gasket, and in particular to cells designed to prevent or minimise the formation of gases such as hydrogen on the current collecting surfaces. This invention also relates to a process for producing such miniature galvanic cells and to a gasket for use in such cells.

The miniaturisation of electronic devices has created a demand for small but powerful electrochemical cells. Cells that utilise an alkaline electrolyte are known to provide high energy density per unit volume and are therefore well suited for applications in miniature electronic devices such as cameras, hearing aids, watches and calculators.

However, alkaline electrolytes, such as aqueous potassium hydroxide and sodium hydroxide solutions, have an affinity for wetting metal surfaces and are known to creep through the sealed metal interface of an electrochemical cell. Leakage in this manner can deplete the electrolyte solution from the cell and can also cause a corrosive deposit on the surface of the cell that detracts from the cell's appearance and marketability. These corrosive salts may also damage the device in which the cell is housed. Typical cell systems where this problem is encountered include silver oxide-zinc cells, nickel-cadmium cells, air depolarised cells, and alkaline manganese dioxide cells.

In the prior art, it has been a conventional practice to incorporate an insulating member or gasket between the cell cup and can so as to provide a seal for the cell. Generally, the gasket must be made of a material that is electrically insulating and that is inert to the electrolyte contained in the cell and the cell environment. In addition, it has to be flexible and resistant to cold flow under pressure of the seal and must maintain these characteristics so as to ensure a proper seal for a long period of storage. Materials such as nylon, polypropylene, ethylene-tetrafluoroethylene copolymer and high density polyethylene have been found to be suitable as gasket materials for most applications.

Typically, the insulating gasket is annular and, in cross-section, in the form of a "J"-shaped configuration including a "U"-shaped portion into which the extended wall of the cup may be inserted, so that, upon radially squeezing the edge of the can, the bottom portion of the gasket forms a seal with the bottom portion of the wall of the cup. The gasket generally extends the entire height of the internal wall of the cell. To better ensure a good seal, a sealant is generally applied to the gasket, including the internal "U"-shaped portion of the gasket, so that, upon insertion of the cup into the gasket, the edge of the extended wall of the cup seats in the sealant and thus, upon the application of a radial squeeze, forms a good seal between the cup and the can.

In conventional miniature zinc alkaline cells, the zinc electrode component usually contacts the terminal directly. Since the terminal is typically also a housing part for cell, the contact surface of the housing for the electrode material inside the cell generally has a large surface area. Moreover, the cell is manufactured with a void space sufficient to accommodate the reaction products produced in the electrode chamber during discharge, since the reaction products have a greater volume than the reactants, and a housing with a large conductive surface was considered useful in order to ensure electrical contact between the electrode material and the terminal under all cell orientations. However, it has been found that certain electrode materials, such as zinc, can form reactive gases, such as hydrogen, at the contact surface between the electrode material and the housing, which gases are detrimental to the proper operation of the cells.

It would, therefore, be desirable to be able to provide miniature cells that can reduce the amount of gassing experienced in such cells whilst ensuring electrical contact between the electrode material and its terminal under all cell orientations. We have now found, surprisingly, that it is possible to provide a cell that meets these objectives.

Accordingly, in a first aspect, the present invention provides a miniature galvanic cell comprising a two-part conductive housing sealed by an insulating gasket, one housing part being a cup associated with one of the electrodes and the other housing part being a can associated with the other electrode, wherein the gasket extends over the internal surface of at least one housing part to form an insulating layer between the housing part and its associated electrode, a current collector extends from the housing part into its associated electrode through an opening in the insulating layer, and the can is secured to the gasket to provide a seal for the cell.

In a second aspect, the present invention provides a gasket that is adapted for a miniature cell as defined in claims 12 to 15.

In a third aspect, the present invention provides a process for assembling the components of a miniature cell into a two-part conductive housing, in which one part is a cup and the other part is a can, including the steps:
(a) preparing a conductive can having a peripheral wall terminating with an edge defining an opening;
(b) preparing a gasket having a base segment, a peripheral wall having a groove therein, and an inner wall defining an opening;
(c) preparing a conductive cup with a peripheral flange;
(d) placing a current collector within and through the opening in the gasket, placing the flange of the cup within the groove, and securing the cup to the gasket so that the flange is secured within the groove of the gasket;
(e) placing the components of the cell, including at least two electrodes and an electrolyte, within the can and cup so that the wall of the can is in parallel alignment with the peripheral wall of the gasket; and
(f) securing the wall of the can against the wall of the gasket to produce a sealed cell.

Advantageously, the current collector member has a relatively small surface area that is electrically contactable with the electrode material, so as to prevent or minimise the formation of gases, such as hydrogen, on the current collector member.

Furthermore, since the electrode is electrically insulated, by the insulating layer of the gasket, from the large surface area of the housing part, gassing on the surface of the housing part is prevented. Moreover, since the current collector protrudes from the housing part into the electrode material, electrical conduction between the terminal and the electrode material is ensured at all cell orientations. A further advantage is that the gasket in accordance with the present invention can easily be used in conjunction with existing cell components, whereas the provision of a current collector in accordance with present invention can be effected simply using conventional techniques.

In one embodiment of the first aspect, the present invention provides a galvanic cell having: (a) two electrodes of opposite polarity, a separator between the electrodes and an electrolyte, all contained within a two-part conductive housing, one part of which is a can which is electrically connected to the first electrode and the other part of which is a flanged cup which is electrically connected to the second electrode; (b) a gasket having a base segment, an inner wall and a peripheral wall which define an internal surface area that contacts the second electrode, where the peripheral wall of the gasket is disposed adjacent the wall of the can and the cup, and the edge of the can is sealed against the gasket, securing the can to the gasket to seal the cell; and (c) a current collector member extending through the opening in the base segment of the gasket and electrically contacting the second electrode at one end and electrically contacting the cup at the other end, such that the portion of the surface area of the current collector that is disposed within the second electrode is less than 25% of the gasket's internal surface area.

In another embodiment of the first aspect, the present invention provides a galvanic cell having: (a) two electrodes of opposite polarity, a separator between the electrodes and an electrolyte, all contained within a two-part conductive housing, one part of which is a can which is electrically connected to the first electrode and the other part of which is a flanged cup which is electrically connected to the second electrode; (b) a gasket having a base segment, an inner wall and a peripheral wall, where the flange of the cup is secured in a groove in the peripheral wall of the gasket, the peripheral wall is adjacent the wall of the can, and the edge of the can is sealed against the gasket, thus securing the can to the gasket and sealing the cell; and (c) a current collector member extending through the opening in the base segment of the gasket and electrically contacting the second electrode at one end and electrically contacting the cup at the other end.

In a preferred embodiment of the third aspect, the gasket in step (b) of the process has the peripheral wall extended to contact the electrode which is electrically connected to the can, thus ensuring that the electrode electrically connected to the cup via the current collector is insulated from the can.

The gasket is an insulating member that is generally made of a material inert to the electrolyte and active components contained in the cell. Therefore these materials of the cell do not react on the surface of the gasket to cause gassing. It is necessary that the current collector make contact with one of the electrodes and one of the external terminals of the cell. To minimise the reactive surface area of the current collector, the gasket is formed as a cup to contain one of the electrodes and to insulate that electrode from the other terminal connected to the other electrode. The gasket thus forms an insulating layer that extends over preferably the whole of the internal surface of the housing cup or can.

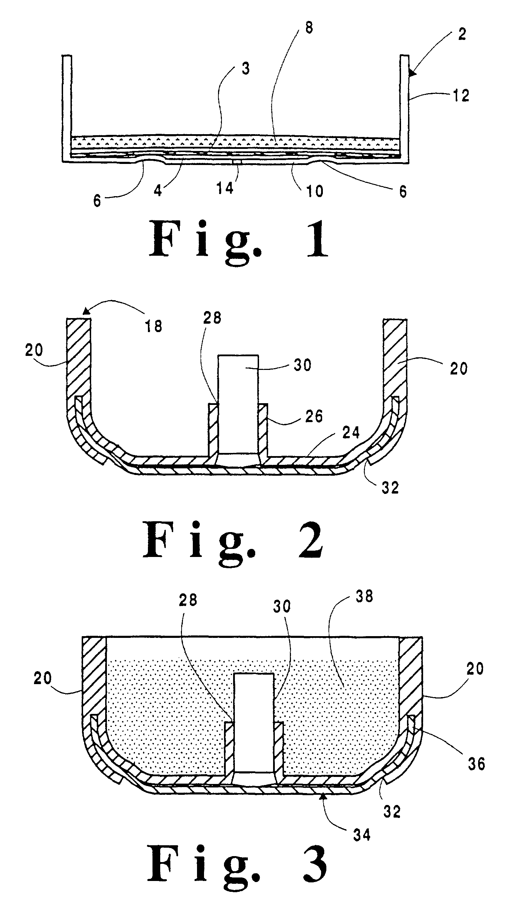

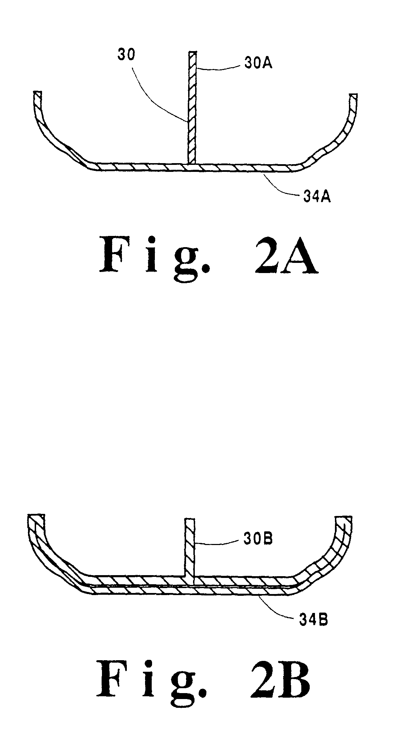

In one embodiment, the gasket further extends to cover a portion of the current collector. The covered portion of the current collector is preferably covered by a sleeve formed of insulating material, which sleeve preferably forms an integral part of the gasket. The sleeve is thus constituted by an inner wall of the gasket and defines the opening, in the gasket, for the current collector. Preferably, the current collector extends into the centre of the electrode chamber, such as from an opening in the gasket that is central in the gasket over the housing cup or can to a position midway between the opening and the separator. Where the surface area of the current collector is relatively large, as in Fig. 2, the gasket preferably extends over for example at least 40%, preferably at least 50%, and more preferably at least 60% of the current collector surface.

The current collector can be a wire, a nail, a cylinder member or any other small volume member able to provide a minimum surface area for exposure to the components of the electrode, such as zinc, and thereby minimise the sites available for forming reactive gases, such as hydrogen. It will be appreciated that the surface of the current collector exposed to the electrode material can be varied by controlling the extent to which the gasket material extends over the current collector. Suitably, if the surface of the current collector is sufficiently small, it may not be necessary to extend the gasket over a portion of the current collector.

The exposed surface area should be sufficient to ensure good electronic contact with the electrode material. Preferably the exposed surface area of the current collector is less than 25% of the surface area defining the internal area of the gasket that faces or contacts the electrode, such as a zinc electrode, more preferably less than 10%, more preferably less than 7%, and most preferably less than 5% of the internal surface area of the gasket.

In one embodiment of the invention, the current collector is secured to the external terminal of the cell. In another embodiment, the current collector performs as the external terminal of the cell. In the latter embodiment, either the cup of the cell and the current collector together form a unitary member or the current collector is a unitary member that functions as the external terminal of the cell as well as collecting current. Therefore, the cup and the current collector may either together constitute one member or, preferably, the cup and current collector constitute two members.

The gasket preferably has a base segment, an inner wall defining an opening in the base segment, and a peripheral wall having a groove disposed therein to accommodate the flange of a flanged cup.

The gasket is preferably a tube having a closed end with an opening and the tube made of a unitary solid material sufficient in thickness to ensure that the inner surface of the wall of the cup will be electrically insulated from the wall of the can.

In one of the embodiments of the present invention, the gasket is disposed adjacent to the inner surface of the can's wall, and a sealant, such as an adhesive, is disposed between the inner surface of the can's wall and gasket and/or between the flange of the cup and a groove in the gasket.

The gasket can be made of any suitable electrically insulating material. Suitable such materials include synthetic rubber, such as polychloroprene (neoprene and viton); vinylidene fluoride resin, such as KYNAR, a trademark of Pennwalt Chemicals Corp.; polyamide resins, such as nylon; polyolefin; polyvinyl chloride (PVC); silicone; tetrafluoroethylene polymer, such as TEFLON, a trademark of E I. DuPont de Nemours; and polypropylene.

The gasket can be formed as a unitary structure or, alternatively, can be composed of two or more segments.

Typical cell systems in which the present invention can be used are alkaline manganese dioxide cells, air depolarised cells, nickel-cadmium cells and silver oxide-zinc cells. Preferably, the cell is an air depolarised cell, more preferably a zinc-air cell. Suitable electrode, electrolyte and separator materials appropriate to the cell system of application are known in the art and will be selected accordingly. Preferably, the cell is a mercury-free cell or zero added mercury cell. In the case of a zinc-air cell, for example, the negative electrode mixture is suitably a mixture of zinc particles, electrolyte and organic compounds such as binders.

The cup for the cell of the present invention can be made of any suitable material, and preferably of an electrically conductive material such as monel, nickel, nickel plated steel, nickel plated stainless steel or nickel clad stainless steel. A nickel layer is preferably used on the exterior surface of the steel strip to increase electrical conductance or electrical contact to a device using the battery. Other laminated materials from which the cup may be made include bilaminates on a stainless steel substrate or a laminate made from more than three layers. Conveniently, round disks are punched from laminated metal strip and then formed into a cup. The inside surface of the cup, suitably a copper layer, directly contacts the current collector.

The can for the cell can be made of any suitable material that will not corrode or otherwise deteriorate when in contact with the materials of the cell. The can for the cell can suitably be made of electrically conductive materials such as stainless steel, nickel or nickel plated steel. For air depolarised cells, typically a hole is punched into the bottom of the can to act as an air-entry port.

The current collector can be made of any suitable electrically conductive material, such as copper, brass or monel. The current collector can be of any suitable shape provided that it can extend from the housing into the electrode material to ensure electronic connection between the housing and the electrode. Preferably, the current collector is a low volume member, such as a wire or a nail. The current collector may be electrically secured to the housing, preferably the cup, using any conventional techniques. Alternatively, as mentioned previously, the current collector may already be formed as a unitary member with the housing.

Preferably, the current collector protrudes through a central opening in the insulating layer provided over the surface of the housing part by the gasket. However, alternatively, the opening can be off-centre. Furthermore, two or more current collectors may be provided, that protrude through one or more openings in the insulating layer of the gasket.

The present invention may be further understood by reference to the embodiments shown in the drawings, and from the following description thereof, in which:
Figure 1 is a cross-sectional view of an assembly of an air electrode in a can.
Figure 2 is a cross-sectional view of an assembly of a cup, a gasket and a current collector for use in accordance with the present invention.
Figure 2A is a cross-sectional view of an assembly of a cup and a current collector for use in accordance with the present invention.
Figure 2B is a cross-sectional view of a unitary cup and current collector for use in the present invention
Figure 3 is a cross-sectional view of the assembly of Figure 2 containing a negative electrode.
Figure 4 is a cross-sectional view of the can and electrode assembly of Figure 1, inverted and then placed over the open end of the assembly of Figure 3 to form a cell assembly.
Figure 5 is a cross-sectional view of the cell assembly of Figure 4 in which the wall of the can has been crimped to provide a sealed cell.
Figure 6 is a cross-sectional view of the sealed cell of Figure 5, inverted.

Figure 1 shows an electrode assembly for an air depolarised cell, containing an air distribution membrane 4, a hydrophobic layer 3, and an electrode 8 disposed on the base 10 of a can 2. As shown, circular can 2 contains an air distribution membrane 4 secured to the inner surface of the can 2. A hydrophobic layer 3, for example of polytetrafluoroethylene, covers the entire bottom of the can 2 including the air distribution membrane 4. The can 2 has patterned internal embossed sections 6 (optional) to provide a defined gap for uniform air distribution across the surface of the electrode 8. The can 2 comprises base 10 abutting a peripheral upstanding wall 12, and disposed in base 10 is an opening 14 providing an air-entry port.

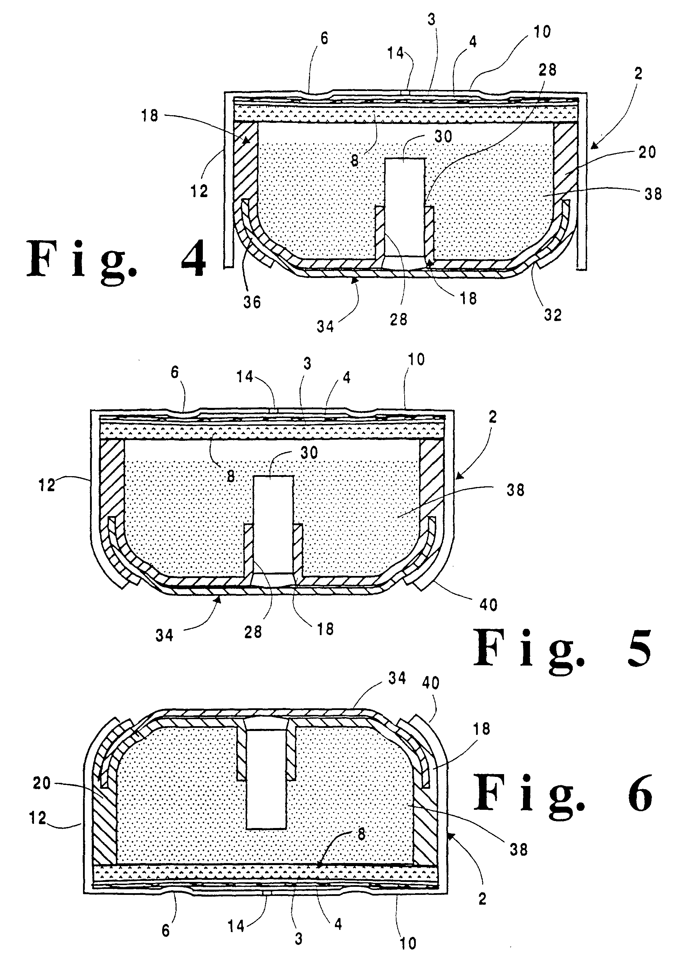

Figures 2 and 3 show a gasket 18 with a peripheral upstanding wall 20, a base segment 24 and an internal upstanding wall 26 defining an opening 28. A cylindrical current collector 30 is secured within opening 28. A groove 32 is disposed in the wall segment 20 of gasket 18. A cup 34 having a peripheral flange 36 is disposed in groove 32 and is in physical contact with current collector 30 so that cup 34 functions as a terminal for the cell. The gasket 18 is shown with a negative electrode mixture 38 placed in the gasket and making electronic contact with the cup 34 via current collector 30.

In Figure 2A, the current collector 30 is a wire or nail 30A that is electrically secured at one end to a cup 34A.

In Figure 2B, the cup 34B is shown as a simple sheet of conductive material folded to produce a central protruding conductive segment 30B that functions as the current collector.

As shown in Figure 4, the can 2 along with the inserted electrode assembly is inverted over the gasket 18 which is preassembled and contains negative electrode 38. The flange 36 of the cup 34 is disposed within groove 32 of gasket 18 and the cup 34 rests on the current collector 30.

As shown in Figure 5, while the can 2 is inverted, the edge or rim 40 of the can 2 is crimped inwardly. The rim 40 of the can 2 is compressed against the electrically insulating gasket 18 which is located between the cup 34 and the can 2, thereby forming a seal and an electrical barrier between the can 2 and the cup 34.

## Claims

1. A miniature galvanic cell comprising a two-part conductive housing sealed by an insulating gasket, one housing part being a cup associated with one of the electrodes and the other housing part being a can associated with the other electrode, wherein the gasket extends over the internal surface of at least one housing part to form an insulating layer between the housing part and its associated electrode, a current collector extends from the housing part into its associated electrode through an opening in the insulating layer, and the can is secured to the gasket to provide a seal for the cell.

2. A galvanic cell according to claim 1, wherein the gasket extends over the internal surface of at least the cup, and the current collector is in electrical contact with the cup.

3. A galvanic cell according to claim 2, wherein the gasket further extends over a portion of the current collector.

4. A galvanic cell according to claim 2, wherein the cup and the current collector are a unitary member.

5. A galvanic cell according to claim 2, wherein the cup and the current collector are two members.

6. A galvanic cell according to claim 5, wherein the current collector is a wire, a nail or a cylinder member.

7. A galvanic cell according to any of claims 1 to 6, wherein the gasket is made of a unitary material.

8. A galvanic cell according to any of claims 1 to 6, wherein the gasket is made of at least two separate segments.

9. A galvanic cell according to any preceding claim, wherein the gasket is made of a material selected from synthetic rubber, vinylidene fluoride resin, polyamide resin, polyolefin, polyvinyl chloride, silicone, polypropylene and tetrafluoroethylene polymer.

10. A galvanic cell according to any preceding claim, wherein the surface area of the current collector disposed within the electrode is less than 25%, preferably less than 10%, more preferably less than 7%, of the gasket's internal surface area.

11. A galvanic cell according to any preceding claim, wherein the cell is an air depolarised cell, preferably a zinc-air cell.

12. A galvanic cell according to claim 1, comprising:
a) a first electrode having a polarity;
b) a second electrode of opposite polarity;
c) a separator between the first electrode and the second electrode;
d) an electrolyte;
e) a two-part conductive housing containing the first electrode, the second electrode, the separator and the electrolyte, the first part of the housing being a conductive can having a wall with an edge defining an opening and being electrically connected to one of the electrodes, and the second part of the housing being a conductive cup having a peripheral flange and being electrically connected to the other electrode;
f) a gasket comprising a base segment, an inner wall defining an opening in the base segment, and a peripheral wall; wherein the peripheral wall of the gasket is disposed adjacent the wall of the can, and the edge of the can is sealed against the gasket thereby securing the can to the gasket to provide a seal for the cell; and
g) a current collector member extending through the opening in the base segment of the gasket and electrically contacting one electrode at one end and electrically contacting the cup at the other end.

13. A galvanic cell according to claim 12, wherein the peripheral wall of the gasket has an annular groove therein, and the flange of the cup is secured in the groove.

14. A galvanic cell according to claim 13, wherein the flange of the cup forms a curved segment on the wall of the cup that is secured in the groove, and the depth of the groove is at least the length of the curved segment.

15. A galvanic cell according to any of claims 12 to 14, wherein the peripheral wall, inner wall, and base segment define an internal surface area for the gasket, and the current collector has a surface area disposed within the second electrode of less than 25% of the gasket's internal surface area.

16. A gasket as defined in any of claims 12 to 15, for a miniature cell.

17. A process for assembling the components of a miniature cell into a two-part conductive housing in which one part is a cup and the other part is a can comprising the steps:
(a) preparing a conductive can with a peripheral wall terminating with an edge defining an opening;
(b) preparing a gasket having a base segment, a peripheral wall having a groove therein, and an inner wall defining an opening;
(c) preparing a conductive cup with a peripheral flange;
(d) placing a current collector within and through the opening in the gasket, placing the flange of the cup within the groove, and securing the cup to the gasket so that the flange is secured within the groove of the gasket;
(e) placing the components of the cell, comprising at least two electrodes and an electrolyte, within the can and cup so that the wall of the can is in parallel alignment with the peripheral wall of the gasket; and
(f) securing the wall of the can against the wall of the gasket to produce a sealed cell.

## Patentansprüche

1. Galvanische Miniaturzelle mit einem zweiteiligen leitfähigen Gehäuse, das durch eine isolierende Dichtungsmanschette abgedichtet ist, wobei ein Gehäuseteil ein Becher ist, der mit einer der Elektroden verbunden ist, während der andere Gehäuseteil ein mit der anderen Elektrode verbundener Topf ist, wobei sich die Dichtungsmanschette über die Innenfläche mindestens eines Gehäuseteils erstreckt, um eine Isolierschicht zwischen dem Gehäuseteil und der mit ihm verbundenen Elektrode zu bilden, wobei durch eine Öffnung in der Isolierschicht ein Stromabnehmer von dem Gehäuseteil in die mit ihm verbundene Elektrode hineinragt, und wobei der Topf an der Dichtungsmanschette befestigt ist, um einen Verschluß für die Zelle zu bilden.

2. Galvanische Zelle nach Anspruch 1, wobei sich die Dichtungsmanschette über die Innenfläche zumindest des Bechers erstreckt und der Stromabnehmer sich in elektrischem Kontakt mit dem Becher befindet.

3. Galvanische Zelle nach Anspruch 2, wobei sich die Dichtungsmanschette ferner über einen Abschnitt des Stromabnehmers erstreckt.

4. Galvanische Zelle nach Anspruch 2, wobei der Becher und der Stromabnehmer ein einheitliches Element sind.

5. Galvanische Zelle nach Anspruch 2, wobei der Becher und der Stromabnehmer zwei Elemente sind.

6. Galvanische Zelle nach Anspruch 5, wobei der Stromabnehmer ein Draht, ein Stift oder ein Zylinderelement ist.

7. Galvanische Zelle nach einem der Ansprüche 1 bis 6, wobei die Dichtungsmanschette aus einem einheitlichen Material besteht.

8. Galvanische Zelle nach einem der Ansprüche 1 bis 6, wobei die Dichtungsmanschette aus mindestens zwei getrennten Segmenten besteht.

9. Galvanische Zelle nach einem der vorstehenden Ansprüche, wobei die Dichtungsmanschette aus einem Material besteht, das unter synthetischem Kautschuk, Vinylidenfluoridharz, Polyamidharz, Polyolefin, Polyvinylchlorid, Silicon, Polypropylen und Tetrafluorethylen-Polymer ausgewählt ist

10. Galvanische Zelle nach einem der vorstehenden Ansprüche, wobei die innerhalb der Elektrode angeordnete wirksame Oberfläche des Stromabnehmers weniger als 25%, vorzugsweise weniger als 10%, stärker bevorzugt weniger als 7% der Innenfläche der Dichtungsmanschette beträgt.

11. Galvanische Zelle nach einem der vorstehenden Ansprüche, wobei die Zelle eine depolarisierte Luftzelle ist, vorzugsweise eine Zink-Luft-Zelle.

12. Galvanische Zelle nach Anspruch 1, die aufweist:
a) eine erste Elektrode mit einer Polarität;
b) eine zweite Elektrode mit entgegengesetzter Polarität;
c) ein Trennelement zwischen der ersten Elektrode und der zweiten Elektrode;
d) einen Elektrolyten;
e) ein zweiteiliges leitfähiges Gehäuse, das die erste Elektrode, die zweite Elektrode, das Trennelement und den Elektrolyten enthält, wobei der erste Teil des Gehäuses ein leitfähiger Topf ist, der eine Wand mit einer Kante aufweist, die eine Öffnung begrenzt und mit einer der Elektroden elektrisch verbunden ist, und wobei der zweite Gehäuseteil ein leitfähiger Becher mit einem Flansch am Umfang ist und mit der anderen Elektrode elektrisch verbunden ist.
f) eine Dichtungsmanschette, die ein Fußsegment, eine Innenwand, die eine Öffnung in dem Fußsegment begrenzt, und eine Umfangswand aufweist, wobei die Umfangswand der Dichtungsmanschette angrenzend an die Wand des Topfes angeordnet ist und die Topfkante gegen die Dichtungsmanschette abgedichtet wird, wodurch der Topf an der Dichtungsmanschette befesfigt wird, um einen Verschluß für die Zelle zu bilden; und
g) ein Stromabnehmerelement, das durch die Öffnung im Fußsegment der Dichtungsmanschette hindurchgeht und an einem Ende mit einer Elektrode und am anderen Ende mit dem Becher in elektrischen Kontakt kommt

13. Galvanische Zelle nach Anspruch 12, wobei in der Umfangswand der Dichtungsmanschette eine ringförmige Nut ausgebildet ist und der Flansch des Bechers in der Nut befestigt wird.

14. Galvanische Zelle nach Anspruch 13, wobei der Flansch des Bechers ein gekrümmtes Segment an der Becherwand bildet, das in der Nut befestigt wird, und wobei die Tiefe der Nut mindestens gleich der Länge des gekrümmten Segments ist.

15. Galvanische Zelle nach einem der Ansprüche 12 bis 14, wobei die Umfangswand, die Innenwand und das Fußsegment eine wirksame Innenfläche für die Dichtungsmanschette bilden und der Stromabnehmer eine innerhalb der zweiten Elektrode angeordnete wirksame Oberfläche von weniger als 25% der wirksamen Oberfläche der Dichtungsmanschette aufweist.

16. Dichtungsmanschette nach einem der Ansprüche 12 bis 15 für eine Miniaturzelle.

17. Verfahren zum Einbau der Komponenten einer Miniaturzelle in ein zweiteiliges leitfähiges Gehäuse, in dem ein Teil ein Becher und der andere Teil ein Topf ist, mit den folgenden Schritten:
(a) Herstellen eines leitfähigen Topfes mit einer Umfangswand, die mit einer Kante endet, die eine Öffnung begrenzt;
(b) Herstellen einer Dichtungsmanschette mit einem Fußsegment, einer Umfangswand mit darin ausgebildeter Nut und einer Innenwand, die eine Öffnung begrenzt;
(c) Herstellen eines leitfähigen Bechers mit einem Flansch am Umfang;
(d) Einführen eines Stromabnehmers in und durch die Öffnung in der Dichtungsmanschette, Einsetzen des Becherflansches in die Nut und Befestigen des Bechers an der Dichtungsmanschette, so daß der Flansch in der Nut der Dichtungsmanschette fixiert ist;
(e) Einsetzen der Zellenkomponenten, die mindestens zwei Elektroden und einen Elektrolyten aufweisen, in den Topf und den Becher, so daß die Wand des Topfes parallel zur Umfangswand der Dichtungsmanschette ausgerichtet ist; und
(f) Befestigen der Topfwand an der Wand der Dichtungsmanschette, um eine verschlossene Zelle herzustellen.

## Revendications

1. Pile galvanique miniature comprenant un boîtier conducteur en deux parties scellé par un joint d'étanchéité isolant, une partie de boîtier étant une coupelle associée à l'une des électrodes et l'autre partie de boîtier étant une boîte cylindrique associée à l'autre électrode, dans laquelle le joint d'étanchéité s'étend sur la surface interne d'au moins une partie de boîtier de façon à former une couche isolante entre la partie de boîtier et son électrode associée, un collecteur de courant s'étend de la partie de boîtier dans son électrode associée à travers une ouverture dans la couche isolante, et la boîte cylindrique est fixée au joint d'étanchéité de façon à assurer l'étanchéité de la pile.

2. Pile galvanique selon la revendication 1, dans laquelle le joint d'étanchéité s'étend sur la surface interne au moins de la coupelle, et le collecteur de courant est en contact électrique avec la coupelle.

3. Pile galvanique selon la revendication 2, dans laquelle le joint d'étanchéité s'étend en outre sur une partie du collecteur de courant.

4. Pile galvanique selon la revendication 2, dans laquelle la coupelle et le collecteur de courant forment un élément unitaire.

5. Pile galvanique selon la revendication 2, dans laquelle la coupelle et le collecteur de courant forment deux éléments distincts.

6. Pile galvanique selon la revendication 5, dans laquelle le collecteur de courant est un fil, un clou ou un élément cylindrique.

7. Pile galvanique selon l'une quelconque des revendications 1 à 6, dans laquelle le joint d'étanchéité est réalisé à partir d'un matériau unitaire.

8. Pile galvanique selon l'une quelconque des revendications 1 à 6, dans laquelle le joint d'étanchéité est réalisé à partir d'au moins deux segments distincts.

9. Pile galvanique selon l'une quelconque des revendications précédentes, dans laquelle le joint d'étanchéité est réalisé à partir d'un matériau sélectionné parmi le caoutchouc synthétique, une résine de fluorure de vinylidène, une résine polyamide, une polyoléfine, le polychlorure de vinyle, le silicone, le polypropylène et le polymère tétrafluoréthylène.

10. Pile galvanique selon l'une quelconque des revendications précédentes, dans laquelle la surface efficace du collecteur de courant disposé dans l'électrode est inférieure à 25%, de préférence inférieure à 10%, plus préférablement inférieure à 7% de la surface efficace interne du joint d'étanchéité.

11. Pile galvanique selon l'une quelconque des revendications précédentes, dans laquelle la pile est une pile dépolarisée à l'air, de préférence une pile zinc-air.

12. Pile galvanique selon la revendication 1, comprenant:
a) une première électrode ayant une polarité;
b) une deuxième électrode de polarité opposée;
c) un séparateur entre la première électrode et la deuxième électrode;
d) un électrolyte;
e) un boîtier conducteur en deux parties contenant la première électrode, la deuxième électrode, le séparateur et l'électrolyte, la première partie du boîtier étant une boîte cylindrique conductrice comportant une paroi dont un bord définit une ouverture et étant reliée électriquement à l'une des électrodes, et la deuxième partie du boîtier étant une coupelle conductice comportant une collerette périphérique et étant reliée électriquement à l'autre électrode;
f) un joint d'étanchéité comprenant un segment de base, une paroi intérieure définissant une ouverture dans le segment de base, et une paroi périphérique; dans laquelle la paroi périphérique du joint d'étanchéité est disposée au voisinage de la paroi de la boîte cylindrique, et le bord de la boîte cylindrique est scellé contre le joint d'étanchéité, pour fixer ainsi la boîte cylindrique au joint d'étanchéité afin d'assurer l'étanchéité de la pile; et
g) un élément formant collecteur de courant s'étendant à travers l'ouverture dans le segment de base du joint d'étanchéité et en contact électrique avec une électrode à une extrémité, ainsi qu'en contact électrique avec la coupelle à l'aune exbémité,

13. Pile galvanique selon la revendication 12, dans laquelle la paroi périphérique du joint d'étanchéité comporte en son sein une gorge annulaire, et la collerette de la coupelle est fixée dans la gorge.

14. Pile galvanique selon la revendication 13, dans laquelle la collerette de la coupelle forme un segment courbe sur la paroi de la coupelle qui est fixé dans la gorge, et la profondeur de la gorge est égale au moins à la longueur du segment courbe,

15. Pile galvanique selon l'une quelconque des revendications 12 à 14, dans laquelle la paroi périphérique, la paroi intérieure et le segment de base définissent une surface efficace interne du joint d'étanchéité, et le collecteur de courant a une surface efficace, disposée dans la deuxième électrode, inférieure à 25% de la surface efficace interne du joint d'étanchéité.

16. Joint d'étanchéité selon l'une quelconque des revendications 12 à 15, pour une pile miniature.

17. Procédé de montage des pièces composantes d'une pile miniature dans un boîtier conducteur en deux parties dans lequel une partie est une coupelle et l'autre partie est une boîte cylindrique, comprenant les étapes consistant à
(a) préparer une boîte cylindrique conductrice dotée d'une paroi périphérique se terminant par un bord définissant une ouverture;
(b) préparer un joint d'étanchéité comportant un segment de base, une paroi périphérique comportant en son sein une gorge, et une paroi intérieure définissant une ouverture;
(c) préparer une coupelle conductrice dotée d'une collerette périphérique;
(d) placer un collecteur de courant dans et à travers l'ouverture du joint d'étanchéité, placer la collerette de la coupelle à l'intérieur de la gorge, et fixer la coupelle au joint d'étanchéité de sorte que la collerette est fixée dans la gorge du joint d'étanchéité;
(e) placer les pièces composantes de la pile, comprenant au moins deux électrodes et un électrolyte, dans la boîte cylindrique et la coupelle de sorte que la paroi de la boîte cylindrique est en alignement parallèle avec la paroi périphérique du joint d'étanchéité; et
(f) fixer la paroi de la boîte cylindrique contre la paroi du joint d'étanchéité de façon à produire une pile étanche.
